# EUROPEAN PATENT APPLICATION

(11) **EP 4 679 083 A1**
(43) Date of publication of application: **14.01.2026**
(21) Application number: 24187694.5
(22) Date of filing: 10.07.2024
(51) Int. Cl.: G01N 30/34, G01N 30/32, G01N 30/88

(54) **MONITORING OF MOBILE PHASE COMPOSITIONS IN LIQUID CHROMATOGRAPHY SYSTEMS USING THERMAL FLOW SENSORS**

(71) Applicant: Evosep ApS, 5230 Odense M (DK)
(72) Inventor: HØRNING, Ole Bjeld, 5000 Odense C (DK); BACHE, Nicolai Holst, 5000 Odense C (DK)
(74) Representative: COPA Copenhagen Patents

(57) **Abstract**

A method for monitoring the solvent composition in a liquid chromatography system, during gradient elution with a mobile phase in a fluid conduit, the mobile phase consisting essentially of a plurality of known solvents, said liquid chromatography system comprising a flow sensor, said method comprising passing the mobile phase by the flow sensor at a known flow rate; obtaining a measurement, via the flow sensor, of a transport property of the mobile phase; and converting the measurement into a solvent composition using a pre-established correlation.

## Description

### FIELD OF THE INVENTION

The present invention relates to the field of liquid chromatography systems. More particularly, the present invention relates to composition analysis of mobile phases in liquid chromatography systems using thermal flow sensors.

### BACKGROUND OF THE INVENTION

High-performance liquid chromatography (HPLC) and Ultra-(high)-performance liquid chromatography (U(H)PLC) are powerful techniques used in analytical chemistry to separate, identify, quantify and/or purify compounds or analytes in samples. In liquid chromatography, the samples containing different compounds are separated in time and space by passing the sample through a chromatography column using a mobile phase. The mobile phase consists of a solvent or a mixture of solvents and carries the sample onto and through the chromatographic column. The chromatographic column contains a stationary phase that selectively retains the analytes of the sample, i.e. each analyte to a different degree, due to different physiochemical properties of the analytes. Various principles for separation may be used depending on the stationary phase. E.g. reverse phase chromatography (separation based on hydrophobic interactions), normal phase chromatography (separation based in hydrophilic interactions), ion exchange chromatography (separation based on charge), and size exclusion chromatography (separation based on molecular size) may be used, resulting in elution of the analytes from the column at different time points (i.e. analytes have different retention time). Regardless of the separation principle, one critical aspect of liquid chromatography systems is the precise delivery of the intended mobile phase composition to achieve accurate, reliable, and reproducible results. Accurate solvent delivery is therefore of utmost importance for high chromatographic performance.

In liquid chromatography, the analytes may be eluted from the column using either isocratic elution or gradient elution. In isocratic elution, a single mobile phase that consists of a single solvent or a mixture of solvents at constant proportions is maintained throughout the entire chromatographic run. This results in a constant elution strength and elution profile throughout the chromatographic run. In contrast, when using gradient elution, the mobile phase composition is varied over time during the chromatographic run. This variation involves changing the composition (i.e. the proportions) of solvents in the mobile phase according to a predefined gradient program. Typically, the concentration of one solvent (the "weak" eluting solvent) decreases, while the concentration of another solvent (the "strong" eluting solvent) increases. By tailoring the gradient program, analysts can achieve better resolution, shorter analysis times, and improved sensitivity compared to isocratic elution. As the composition of the mobile phase directly impacts the retention time, resolution, and the peak shape of the analytes, ensuring an exact solvent composition at a given time and position in the system is crucial to obtain accurate and reproducible chromatographic performance. Thus, (real-time) monitoring of the solvent composition may be used, as quality control or validation, to ensure proper functioning of a chromatographic system as well as consistency between separate chromatographic systems.

The gradient elution in a chromatographic system may be achieved by using e.g. binary pumps (one drawing a solvent from channel A, e.g. water, and one drawing a different solvent from channel B, e.g. ACN), wherein the speed of each individual pump is altered during the run and in principle dictates the solvent composition. However, the speed of the pumps is not an optimal measure to determine solvent composition at any given point in the system away from the pumps as that composition may be influenced by mixing efficiency, pump accuracy, fluid leakages, pump wear, and/or unexpected additional dwell volumes in the system. The system is designed with a specific tubing configuration, having a specific and predictable dwell volume. However, the system may also include unintended additional dwell volumes caused by improper connection of tubing, fittings and columns, which differ from system-to-system and hence leads to unpredictable retention time changes. The presence of additional dwell volumes in the tubing, fittings, and other components lead to unexpected gradient delays (i.e. the dwell volumes cause delays in the delivery of the gradient), and can result in inaccuracies in gradient formation due to diffusion effects. Furthermore, dwell volumes also contribute to sample dispersion where analytes are dispersed or spread out along the flow path, leading to broadened peaks and reduced chromatographic resolution. Therefore, the time taken for solvent mixtures to traverse the dwell volumes also affects the timing and shape of the gradient profile, which can impact the reproducibility and accuracy of the chromatographic analysis. Hence, minimizing dwell volumes is particularly important in U(H)PLC because of the use of smaller diameter columns and lower flow rates. Furthermore, even if measures are taken to optimize solvent delivery when using leak-tight high-quality pumps and minimized flow pulsations to maintain consistent flow rates, dissolved gases in the mobile phase can also affect the accuracy of the flow rate and the gradient composition, leading to variability in chromatographic performance, even in the presence of inline degassing. Thus, in practice, achieving exact gradients can be challenging.

UV-Vis detection is one of the most common detection methods in liquid chromatography, and besides detection of the actual analytes, UV-Vis detectors have been used to measure solvent composition to verify the compositional accuracy of the pump(s) and determine the dwell volume of the system by running step gradient profiles with a mobile phase spiked with a chromophoric compound (see LCGC NORTH AMERICA VOLUME 37 NUMBER 6 JUNE 2019). Such tests are often performed as part of operational qualification (OQ) or quality control (QC) to ensure proper function of the system and to ensure that it operates according to its intended performance and meets the quality specifications.

However, UV-Vis detectors possess some drawbacks in terms of measuring solvent composition. First, common HPLC solvents (e.g. water, MeOH, or ACN) possess poor absorbance in the UV spectrum, necessitating the addition of trace amounts of a strong absorbing analyte, e.g. acetone, as internal standard to measure the solvent composition and determine the dwell volume. Since acetone is highly volatile, the spiked concentration of acetone in the buffer container tends to change over time. Furthermore, low volume UV-VIS sensors are needed for low flow measurements, where such sensor cells are expensive, error prone, and are susceptible to cell clogging. Furthermore, UV sensors do not tolerate high pressure of the measured mobile phase and current UV sensors are typically limited to use at pressures below 130 bar (1,900 psi), necessitating the need for replacement of the column with a conduit to allow measuring the gradient profile with a UV detector to determine the mobile phase composition and the system dwell volume. Finally, UV-Vis detectors require frequent calibration as they drift over time.

Thus, there is a need in the art for new means and methods for determining the solvent composition and/or dwell volume, in particular in low flow rate-based and/or high pressures-based systems.

The present invention sets forth to provide a new, cheap, and reliable method for composition analysis of mobile phases that may be performed as part of operational qualification (OQ) or quality control (QC) to ensure proper functioning of the chromatographic system.

### SUMMARY OF THE INVENTION

On this background, it may be seen as an object of the present disclosure to allow the monitoring of a solvent composition in a liquid chromatography system.

One or more of these objects may be met by aspects of the present disclosure as described in the following.

A first aspect of the present disclosure relates to a method for monitoring the solvent composition in a liquid chromatography system, preferably during gradient elution, with a mobile phase in a fluid conduit, the mobile phase comprising or consisting essentially of a plurality of known solvents, said liquid chromatography system comprising a flow sensor adjacent to, preferably exposed to, the mobile phase in the fluid conduit, said method comprising:
- passing the mobile phase by the flow sensor at a known flow rate;
- obtaining a measurement, via the flow sensor, of a transport property, such as a thermal property, an electrical property or a viscosity property, of the mobile phase; and
- converting the measurement into a solvent composition using a pre-established correlation, e.g. a correlation curve.

Using a flow sensor adapted to measure a transport property, such as a thermal flow sensor, an electrical flow sensor, or a pressure differential flow sensor, has several advantages over a conventional UV-Vis detector including cost, commercial availability, allowing for a straight flow path (and is therefore less prone to clogging), usability at higher pressures, and no requirement of any chromophoric additives. Furthermore, such flow sensors (especially thermal flow sensors) are stable over time and need not be re-calibrated on a frequent basis.

In the present context, a mobile phase comprises or consists essentially of a plurality of known solvents, e.g., water and acetonitrile. However, it should be appreciated that a single solvent may contain one or more minor impurities based on the degree of purity of the solvent. Furthermore, it should be appreciated that the solvents may contain additives, such as an acid (e.g. TFA) or base (e.g. NH₄HCO₃), commonly used in the art to adjust the pH of the mobile phase. In some embodiments, the mobile phase may comprise or consist essentially of two solvents (i.e. binary mobile phase). In some embodiments, the mobile phase may comprise or consist essentially of three solvents (i.e. ternary mobile phase) or even four known solvents (i.e. quaternary mobile phase).

In the present context, gradient elution should be understood as any change in the solvent composition of the mobile phase during the chromatographic run. Thus, gradient elution may e.g. refer to a linear gradient, a stepwise gradient, and/or mixtures thereof.

In the present context, a transport property of the mobile phase are properties that describe how a mobile phase transfer mass, energy, or momentum within the fluid. Examples of transport properties are:
- thermal properties, such as thermal conductivity, or specific heat capacity;
- electrical properties, such as resistivity, capacitance or inductance; and
- viscosity properties, such as dynamic viscosity.

On the other hand, optical properties describe how a material interacts with light (electromagnetic waves) and include properties like refractive index, absorbance, reflectance, and transmittance. These properties do not describe the movement or transport of substances or energy within the material itself but rather how the material affects light passing through or interacting with it.

The method relies on solvents which are commonly used in chromatography differs in at least some transport properties. For example, a commonly used solvent pair in chromatography is 0.1% formic acid in water and acetonitrile. 0.1% formic acid has a relatively high electrical conductivity, around 154 µS/cm at 25°C, in contrast to pure acetonitrile that has a very low electrical conductivity in the order of 7 µS/cm. In other words, there is an approximately 20-fold difference in resistivity between these two exemplary solvents of the mobile phase. As another example, the dynamic viscosity of water at 25°C is approximately 0.89 mPa·s and the dynamic viscosity of acetonitrile (CH₃CN) at 25°C is approximately 0.35-0.44 mPa·s, i.e. a pronounced difference of approximately a factor of 2.

Accordingly, an observed transport property of a mobile phase of known solvents at a known flow rate, and possibly temperature, can be used to derive the solvent composition (i.e. the solvent composition that would lead to the observed transport property).

In a preferred embodiment, the flow sensor is a thermal flow sensor including a heating element adjacent, preferably exposed, to the mobile phase in the fluid conduit, said method comprising a step of introducing, via the heating element, a known amount of heat energy in the mobile phase, wherein the transport property is a thermal property, such as thermal conductivity or specific heat capacity, and the measurement is obtained, via the thermal flow sensor, in response to known amount of heat energy introduced into the mobile phase by the heating element.

Using a thermal flow sensor has several advantages over a conventional UV-Vis detector including cost, commercial availability, allowing for a straight flow path (and is therefore less prone to clogging), usability at higher pressures, and no requirement of any chromophoric additives. Furthermore, thermal flow sensors are stable over time and need not be re-calibrated on a frequent basis. Further, thermal flow sensors are often more sensitive than electro-chemical sensors and more compact, robust, and stable than pressure differential flow sensing allows at least when used for the purpose of measuring the viscosity of the mobile phase.

Additionally, or alternatively, the plurality of known solvents in the mobile phase preferably numbers two known solvents (i.e. binary mobile phase e.g., water and acetonitrile) but may also number three (i.e. ternary mobile phase) or even four known solvents (i.e. quaternary mobile phase). The plurality of known solvents each has a distinct thermal property, such as distinct specific heat capacity or distinct thermal conductivity. During the gradient elution, the composition of the mobile phase may be altered only with respect to two of the known solvents. Thus, in case of a ternary mobile phase, one of the known solvents may be kept in a constant proportion of the mobile phase during the gradient elution. Likewise, in quaternary mobile phase, two of the known solvents may be kept in a constant proportion of the mobile phase during the gradient elution of the mobile phase.

Additionally, or alternatively, the flow sensor may be positioned downstream of the mixer in the fluid conduit and upstream of, and preferably adjoining, a chromatography column. Most preferably, the flow sensor is positioned just upstream of and adjoining a chromatography column in order to accurately determine the dwell volume of the chromatographic system and to determine the solvent composition at the column inlet, thereby taking any diffusion effects caused by the dwell/dead volumes and affecting the solvent composition into account. Alternatively, although less preferred, the flow sensor may be positioned downstream of the chromatography column.

The method of the present disclosure may be used in of operational qualification (OQ) or quality control (QC) of any analytical (or preparative) liquid chromatographic system. Hence, the method may be used in e.g. HLPC, UPLC, UHPLC, capillary LC or nanoflow LC systems operating with different chromatographic column diameters, at different flow rates and pressures.

Additionally, or alternatively, the known flow rate may be a substantially constant flow rate. Alternatively, the known flow rate may involve a known flow rate gradient. As another example, the known flow rate may be known but non-constant and the method may involve a step of compensating for the known non-constant flow rate via a compensation algorithm. Maintaining a constant flow rate through the flow sensor, e.g. arranged just upstream from the chromatographic column, makes the conversion from a flow measurement to a solvent composition simple since the correlation table (or algorithm) requires the smallest number of parameters. However, it is also possible to convert a changing flow rate to a solvent composition measurement as long as the flow rate is known and mapped out a priori. So, while the present disclosure teaches the use of a constant flow rate for conversion into composition, then it is also possible at higher complexity to use a changing flow rate for the same purpose.

Additionally, or alternatively, the known flow rate may be in the range of 1 nL/min - 20 mL/min, preferably 1 nL/min - 2 mL/min, more preferably 5 nL/min - 200 µL/min, or even more preferably 10 nL/min - 100 µL/min. The method utilising the flow sensor can advantageously be applied to monitor solvent composition during such low flow rates. Additionally, or alternatively, the known flow rate may be at most 20 mL/min, preferably at most 2 mL/min, or more preferably at most 100 µL/min. Additionally, or alternatively, the known flow rate may be at least 1 nL/min, preferably at least 5 nL/min, or more preferably at least 10 nL/min.

The method of the present disclosure is particularly useful in LC systems operating at high pressures where the pressure of the mobile phase prevents the use of UV detectors that typically only tolerate pressures up to about 10 to 35 bar (for standard UV detectors) or up to about 100 to 140 bar (for high pressure UV detectors). Thus, UV detectors do not tolerate the pressure upstream of the chromatography column that is often in the range of 200-1,200 bars depending on the LC system.

Additionally, or alternatively, the pressure of the mobile phase (upstream of the chromatographic column) may be at least 200 bar, optionally at least 300 bar, preferably at least 400 bar, more preferably at least 500 bar, even more preferably least 700 bar, or most preferably at least 1000 bar. The method utilising the flow sensor can advantageously be applied in such a high-pressure liquid chromatography process in contrast to a UV-VIS sensor.

Additionally, or alternatively, the flow sensor may comprise a pipe section. An inlet end and an outlet end of the pipe section may form part of the fluid conduit. The fluid volume of the pipe section between the inlet end and outlet end may be at most 1 µL, preferably at most 150 nL, or more preferably at most 100 nL. This has the advantage of limiting the amount of dwell volume added to the liquid chromatography system.

Additionally, or alternatively, the flow sensor may comprise at least one first sensing element and at least one second sensing element exposed to the mobile phase downstream of the first sensing element.

Additionally, when the flow sensor is a thermal flow sensor, the heating element may be arranged between the first sensing element and the second sensing element. The first sensing element and the second sensing element may be arranged symmetrically on opposite sides of the heating element. Additionally, the measurement may be a temperature difference between the first sensing element and the second sensing element and may be used to derive a thermal property, e.g. thermal conductivity or specific heat capacity, of the mobile phase.

Additionally, or alternatively, the fluid conduit may comprise a measurement volume defined from the first sensing element to the second sensing element, wherein the measurement volume is at most 50 nL, preferably at most 25 nL, or more preferably 10 nL. For example, the measurement volume may be defined as the volume from a cross-section of the fluid conduit at the first sensing element to a cross-section of the fluid conduit at the second sensing element.

Additionally, or alternatively, the mobile phase may comprise a laminar flow at the flow sensor, preferably at a Reynolds number of at most 2300. The liquid chromatography system may comprise one or more flow conditioning elements arranged upstream of the flow sensor. For example, a first flow conditioning element may be configured to condition the mobile phase to the laminar flow at the flow sensor, and/or a second flow conditioning element may be configured to mix the mobile phase to ensure sufficient mixing at the flow sensor.

Additionally, or alternatively, the thermal flow sensor may preferably be a calorimetric thermal flow sensor. However, in alternative embodiments, a hot-wire thermal flow sensor, hot-film thermal flow sensor, or a time-of-flight thermal flow sensor may be utilised. A time-of-flight flow sensor comprises a heating element producing heat pulses and a temperature sensing element at a known distance from the heater. The solvent composition can then be determined from the propagation time needed for the heat pulse to reach the temperature sensing element at the known flow rate. A hot-wire or hot-film flow sensor comprises a first heating element exposed to the flow. The effect of the flow on hot-wire/hot-film's power consumption or temperature is proportional to the solvent composition of the mobile phase at known flow rate. Like the hot-wire/hot-film flow sensor, a calorimetric flow sensor also has a heating element exposed to the flow. In addition, the calorimetric flow sensor comprises two temperature sensors, a first sensing element upstream of the heating element and a second sensing element downstream of the heating element. The temperature sensors are symmetrically placed against the heating element. When there is no flow, the heating element ideally creates a symmetrical thermal distribution around it, hence, the temperature sensors should measure the same temperature. However, when flow occurs, the thermal distribution is disturbed resulting in a higher temperature at the downstream second sensing element than at the upstream first sensing element. Thus, at a known flow rate, the temperature difference ΔT between the two temperature sensing elements is a function of the heat capacity or heat conductivity of the solvent and hence the solvent composition of the mobile phase.

Additionally, or alternatively, the known amount of energy may be a pulse of energy or a continuous power.

Additionally, or alternatively, the method may in a first or a second embodiment further comprise a step of:
- determining a composition error by comparing the obtained solvent composition with an expected solvent composition.

In the first embodiment, the method may be performed as part of an operational qualification (OQ) prior to initiating a liquid chromatography process and further comprises the steps of:
- in accordance with a determination that the composition error is equal to or less than a predetermined threshold, initiating the liquid chromatography process; and
- in accordance with a determination that the composition error is greater than a predetermined threshold, sending an alert to the liquid chromatography system.

The first embodiment of the method may further comprise a step of detaching the flow sensor from the fluid conduit and resealing the fluid conduit prior to initiating the liquid chromatography process.

In the second embodiment, the method is performed during a liquid chromatography process, further comprising the steps of:
- in accordance with a determination that the composition error is equal to or less than a predetermined threshold, continuing the liquid chromatography process; and
- in accordance with a determination that the composition error is greater than a predetermined threshold, sending an alert to the liquid chromatography system.

The second embodiment of the method may further comprise performing the method continuously so as to monitor the solvent composition in the liquid chromatography system in real time.

Additionally, or alternatively, the method may further be in a third embodiment combining the first embodiment (i.e. performing a startup check before initiating the liquid chromatography process) and the second embodiment (i.e. monitoring the solvent composition during the liquid chromatograph process). In the third embodiment, the flow sensor remains attached during the liquid chromatography process.

A second aspect of the present disclosure relates to a method of obtaining a pre-established correlation for use in a method according to the first aspect, said method comprising the steps of:
- passing a mobile phase comprising a pre-determined solvent composition of a plurality of known solvents by a thermal flow sensor at a known flow rate;
- introducing, via a heating element of the thermal flow sensor, a known amount of heat energy in the mobile phase;
- obtaining a measurement, via the thermal flow sensor, of the dissipation of heat energy from the heating element;
- preferably repeating the preceding steps for one or more additional predetermined solvent composition(s); and
- correlating the measurement(s) and the pre-determined solvent composition(s) to obtain the pre-established correlation.

It is also envisaged that a correlation matrix can be established by measuring pairs of solvent composition and flow rates allowing the thermal flow sensor analyses to derive solvent compositions at different but known and constant flow rates.

A third aspect of the present disclosure relates to a chromatographic system comprising a thermal flow sensor for monitoring the solvent composition of a binary mobile phase, wherein the thermal flow sensor is in fluid connection with the chromatographic column and a sample loop during elution, and wherein the thermal flow sensor is positioned upstream of, and preferably adjoining, a chromatographic column.

### BRIEF DESCRIPTION OF THE FIGURES

Embodiments of the invention will be described in more detail in the following with regard to the accompanying figures. The figures show one way of implementing the present invention and are not to be construed as being limiting to other possible embodiments falling within the scope of the attached claim set.
Fig. 1 shows a simplified liquid chromatography system comprising a thermal flow sensor for use in a method according to the first aspect of the present disclosure.
Fig. 2 shows the working principle of a thermal flow sensor for use in the method according to the first aspect of the present disclosure.
Fig. 3A shows exemplary results of a correlation sequence for obtaining the pre-established correlation for use in the method according to the first aspect of the present disclosure.
Fig. 3B exemplary shows a correlation curve for use in the method according to the first aspect of the present disclosure.
Fig. 4 shows the working principle of an electrical flow sensor and a differential pressure flow sensor.

### DETAILED DESCRIPTION OF THE INVENTION

The present invention relates to the finding that thermal flow sensors may be used in composition analysis of mobile phases in liquid chromatographic systems. The present finding allows for the use of thermal flow sensors in operational qualification (OQ) or quality control (QC) to ensure that the liquid chromatographic system operates according to its intended performance and meets the quality specifications. Flow sensors are commonly employed in HPLC systems to measure the flow rate of each separate solvent prior to mixing the mobile phase in the chromatographic system to provide real-time validation of the HPLC system performance.

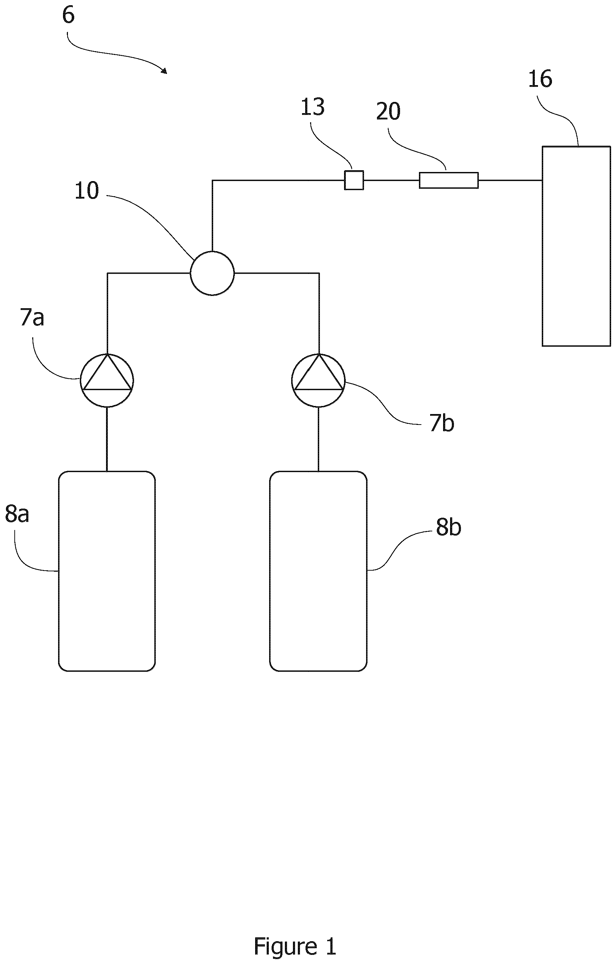

For the purpose of measuring the solvent composition, the thermal flow sensor may be arranged in the HPLC system 6 in between the mixer and the chromatographic column to measure the composition of the mobile phase. However, preferably, the thermal flow sensor is arranged adjoining the inlet of the chromatographic column such that it takes account of any dwell volumes in the system. Fig. 1 shows the schematics of a simple embodiment of the invention in a common setup of a HPLC system 6 having binary pumps 7a, 7b, drawing solvents from two flasks 8a, 8b (i.e. from channel A and B) through a filter (not shown). The pumps are advantageous individually monitored and controlled using flow sensors (not shown) in a feedback loop to ensure a constant flow rate. The solvents pass through a mixer 10 and via a sample injector 13 and onto a chromatography column 16. The thermal flow sensor 20 is positioned between the sample injector 13 and the chromatography column 16. In a preferred embodiment, the thermal flow sensor is positioned in close proximity to the inlet of the chromatographic column 16.

In the present context, it should be understood that Fig. 1 only illustrates one HPLC setup to illustrate a preferred arrangement of the thermal flow sensor.

Thus, it will be apparent that the invention may be used in any setup using e.g. quaternary pumps instead of binary pumps, or cartridges or trapping columns prior to the sample loop as e.g. described in WO2018/059639A1 and WO2018/059640. Regardless of the setup of the chromatographic system, the thermal flow sensor, for measuring the mobile phase composition, e.g. in real time, should preferably be positioned in close proximity to the inlet of the chromatographic column.

Flow sensors in HPLC systems may include piston flow sensors, pressure-based flow sensors or thermal flow sensors. Thermal flow sensors are sensors that measure the flow rate of a fluid (liquid or gas) by utilizing the principles of heat transfer. They rely on the ability of fluid flow rate to alter the heat profile around the sensor.

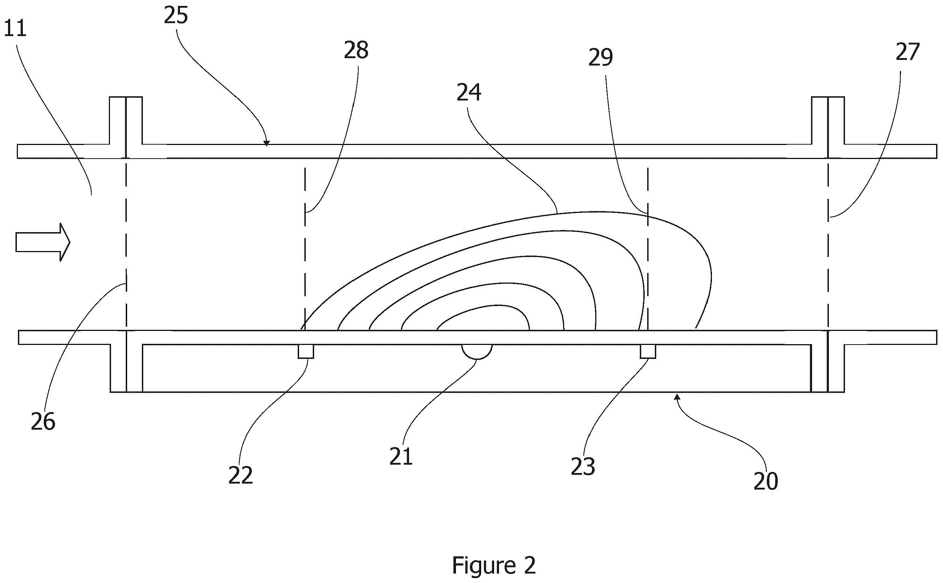

Fig. 2 illustrates the working principle of a preferred thermal flow sensor 20. The thermal flow sensor 20 comprises a heating element 21, a first temperature sensor 22 arranged upstream of the heating element 21 and a second temperature sensor 23 arranged downstream of the of the heating element 21. The role of the heating element 21 is to dissipate heat energy into the mobile phase 11 by passing an electrical current through the heating element via resistive heating, delivering a known amount of energy. As the mobile phase 11 flows past the heating element 21, heat is transferred from the heating element 21 to the mobile phase 11 known flow rate via convection. The first and second temperature sensors 22, 23, detect the heat distribution 24 (or heat profile) by measuring the temperature of the liquid before and after it passes the heating element 21. In conditions where no flow is present, the heat distribution 24 remains symmetrical, and the temperature at both sensors 22, 23 remains equal (when the sensors 22, 23 are arranged symmetrically around the heating element 21). When the mobile phase flows across the sensors 22, 23, this balance is disrupted. The flowing liquid carries heat from the heating element 21 towards the downstream temperature sensor 23, as illustrated in Fig. 2, with a skewed heat distribution 24. As a result, the heat distribution 24 shifts, creating a temperature disparity between the two sensors 22, 23, which can be correlated to flow rate, as the rate of heat transfer is proportional to the velocity of the fluid when the thermal properties of the fluid remain constant. When the fluid flow rate increases, more heat is carried away from the heating element, and the more significant the temperature difference between the sensors become and vice versa. Thermal flow sensors are commonly used to measure flow rate of HPLC pumps.

The present inventors found that thermal flow sensors may be used in a method for compositional analysis of solvent mixtures, based on the realization that the heat distribution 24 around the heating element 21, is influenced, not only by flow rate, but also by the thermal properties of the mobile phase, for example the thermal conductivity or the specific heat capacity. The thermal properties of the mobile phase are determined by the specific composition of the mobile phase (i.e. ratio between and the type of solvents in the mobile phase).

For example, when the thermal conductivity of the mobile phase changes over time in gradient elution, the temperature difference between the first temperature sensor 22 arranged upstream and the second temperature sensor 23 arranged downstream also changes because heat transfer occurs at a lower rate in a mobile phase of low thermal conductivity compared to a mobile phase of high thermal conductivity. Similarly, a mobile phase of low specific heat capacity results in a higher temperature difference than a mobile phase of high specific heat capacity, again provided that the flow rate is held constant. The inventors found that the thermal flow sensors of the prior art can be used to provide a precise, reliable, and cheap means for measuring the composition of a mobile phase. This may be beneficial in operational qualification (OQ) or quality control (QC) to e.g. verify the compositional accuracy of the pump(s) and to ensure proper functioning of the system. It may also be used for real-time monitoring of solvent composition under e.g. gradient elution according to a specified gradient program provided that a constant flow rate is maintained.

Accordingly, the monitoring method involves the steps of introducing, via the heating element 21, a known amount of heat energy in the mobile phase 11; obtaining a measurement, via the thermal flow sensor 20, of the dissipation of heat energy from the heating element 21; and converting the measurement into a solvent composition using a pre-established correlation. Thereby, a solvent composition of the mobile phase can be obtained.

In both a first and a second embodiment, the method further comprises a step of:
- determining a composition error by comparing the obtained solvent composition with an expected solvent composition.

In the first embodiment, the method may be performed as part of an operational qualification (OQ) or quality control (QC) prior to initiating a liquid chromatography process, and further comprises the steps of:
- in accordance with a determination that the composition error is equal to or less than a predetermined threshold, initiating the liquid chromatography process; and
- in accordance with a determination that the composition error is greater than a predetermined threshold, sending an alert to the liquid chromatography system.

The alert may indicate excessive dwell volumes, leaks, bad pump calibrations, or other causes. In case an alert is received by the liquid chromatography system, the system or an operator may decide to refrain from initiating the liquid chromatography process. The operator may then inspect the system to identify the cause of the alert.

The first embodiment of the method may further comprise a step of detaching the thermal flow sensor from the fluid conduit and resealing the fluid conduit prior to initiating the liquid chromatography process.

In the second embodiment, the method is performed during a liquid chromatography process and further comprises the steps of:
- in accordance with a determination that the composition error is equal to or less than a predetermined threshold, continuing the liquid chromatography process; and
- in accordance with a determination that the composition error is greater than a predetermined threshold, sending an alert to the liquid chromatography system.

The alert may indicate excessive dwell volumes, leaks, bad pump calibrations, or other causes. In case an alert is received by the liquid chromatography system, the system or an operator may decide to stop the liquid chromatography process. The operator may then inspect the system to identify the cause of the alert.

The second embodiment of the method may further comprise performing the method continuously so as to monitor the solvent composition in the liquid chromatography system in real time.

A third embodiment of the method is also envisaged combining the first embodiment, i.e. performing the method as part of an operational qualification (OQ) or quality control (QC) prior to initiating the liquid chromatography process, and the second embodiment, i.e. monitoring the solvent composition during the liquid chromatography process. In the third embodiment, the thermal flow sensor remains attached during the liquid chromatography process.

The method of the present invention can therefore be used to provide reliable information about the composition of the mobile phase in a chromatographic system. This allows the operator of the chromatographic system a simple and easy way to check whether the system performs as expected before initiating a chromatographic process. This also allows the operator to perform a real-time monitoring of system performance.

In the preferred embodiment shown in Fig. 2, the thermal flow sensor 20 comprises a pipe segment 25 with an inlet end 26 and an outlet end 27 defining a fluid volume of around 100 nL. The measurement volume between a first cross-section 28 of the fluid conduit at the first sensing element 22 and a second cross-section 29 of the fluid conduit at the second sensing element 23 is around 10 nL. Accordingly, the contribution of the thermal flow sensor 20 to the dead volume of the system is negligible. The pipe segment 25 (and thus the thermal flow sensor 20) can be detached from the liquid chromatography system 6 as desired.

For example, the thermal flow sensor 20 can be included as part of a periodic (e.g., daily, weekly, or monthly) operational qualification (OQ) or quality control (QC) process. Alternatively, the thermal flow sensor 20 can remain in place to perform continuous (e.g., real-time) or intermittent monitoring of the liquid chromatography process.

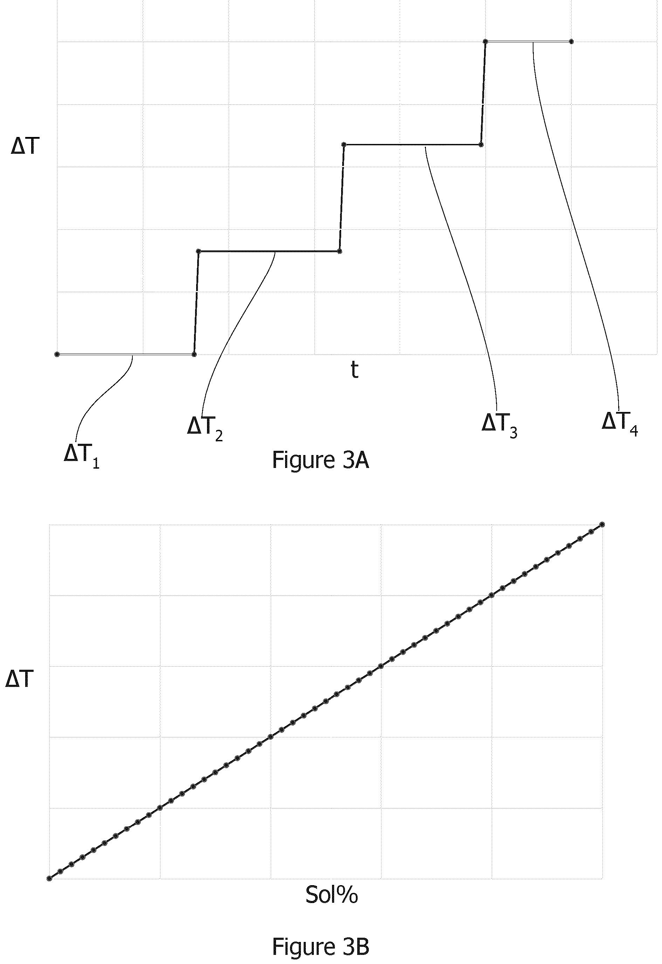

The method relies on establishing a relationship between an observed measurement by the thermal flow sensor and a resulting solvent composition. Such a relationship can be established by initially running a correlation sequence whereby measurements, e.g. temperature difference ΔT, of the thermal flow sensor 20 are logged as a function of time, t, while a set of known liquid compositions are sequentially passed by the thermal flow sensor 20. The next known liquid composition is passed by the thermal flow sensor 20 only after the measurement of the current known liquid composition has settled. The results can be as illustrated in Fig. 3A. In this example, a first known liquid composition (in this example, comprising 100% of solvent A and 0% of solvent B) is passed by the thermal flow sensor 20 which in turn measures temperature difference to be a first value ΔT₁. Afterwards a second known liquid composition (comprising 67% of solvent A and 33% of solvent B) is passed by the thermal flow sensor 20 which in turn measures temperature difference to be second value ΔT₂. Then a third known liquid composition (comprising 33% of solvent A and 67% of solvent B) leads to a third value ΔT₃ and a fourth known liquid composition (comprising 0% of solvent A and 100% of solvent B) leads to a fourth value ΔT₄. From these results, a rough relationship between the measurement of the thermal flow sensor and the liquid composition can be established. The above example was established by running four different liquid compositions with a step change of 33% (i.e., 100%, 67%, 33% and 0% of solvent A). A more fine-grained correlation can be established by running smaller step changes. Fig. 3B illustrates the relationship between temperature difference as measured by the thermal flow sensor and the percentage of solvent A (in a binary solvent composition also comprising solvent B) established with step changes of 2%. Alternatively, a known linear gradient of solvent composition may also be passed by the thermal flow sensor to establish the correlation.

It is also envisaged that a correlation matrix can be established by measuring pairs of solvent composition and flow rates allowing the thermal flow sensor to derive solvent compositions at different but known and constant flow rates.

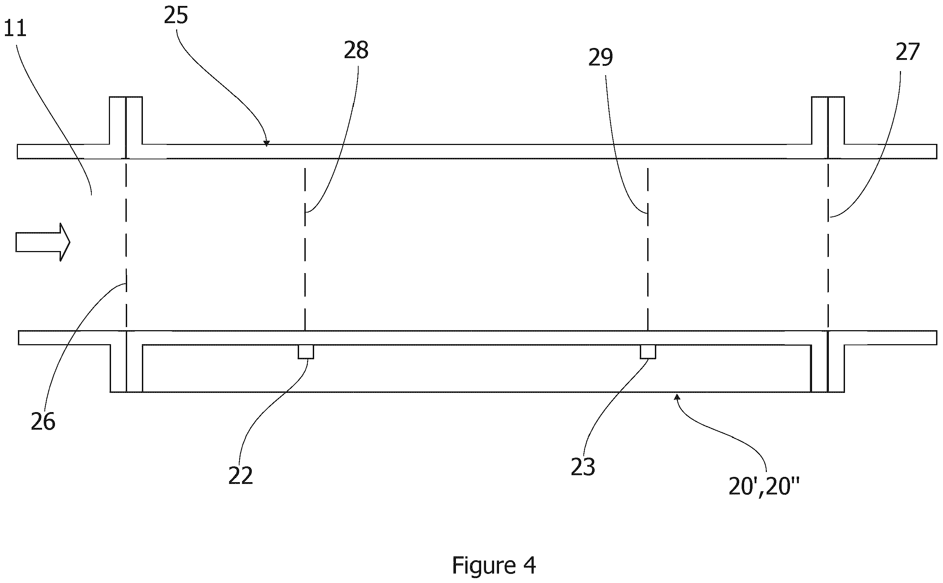

Turning to Fig. 4 showing alternative embodiments of the flow sensor, the flow sensor 20 may alternatively be implemented as either an electrical flow sensor 20' or a pressure differential flow sensor 20".

The electrical flow sensor 20' relies on measuring changes in an electrical property of the mobile phase and comprises a first and a second sensing element 22, 23 in the form of electrodes in electrical connection with the mobile phase. For example, the electrical flow sensor 20 can measure changes in the resistivity of the mobile phase. A voltage difference is applied between the electrodes. The current travelling between the electrodes via the mobile phase can be derived by Ohm's law, R = U / I, where R is the resistance, U is the (known) potential difference, and I is the measured current. A commonly used solvent pair in chromatography is 0.1% formic acid in water and acetonitrile. 0.1% formic acid has a relatively high conductivity, around 154 µS/cm at 25°C, in contrast to pure acetonitrile that has a very low conductivity in the order of 7 µS/cm. In other words, there is an approximately 20-fold difference in resistivity between these two exemplary solvents of the mobile phase. At a known flow rate and temperature, it is possible to establish a correlation to convert a measured current between two electrodes 22, 23 to the solvent composition of the mobile phase. Although less preferred, it should be mentioned that it would be possible to measure other electrical properties, such as capacitance and inductance, of the mobile phase to derive the solvent composition in a similar way.

The pressure differential flow sensor 20" relies on measuring changes in viscosity of the mobile phase as the solvent composition changes. Viscosity can be found by measuring the pressure drop across a conduit at a known flow rate and temperature using Poiseuille's equation, µ = (n * r⁴ * ΔP) / (8 * L * Q), where µ is the dynamic viscosity, r is radius of the conduit, ΔP is the pressure difference between the pressure sensing elements, L is the length of the conduit between the pressure sensing elements, and Q is the known volumetric flow rate. The dynamic viscosity of water at 25°C is approximately 0.89 mPa·s and the dynamic viscosity of acetonitrile (CH₃CN) at 25°C is approximately 0.35-0.44 mPa·s, i.e. a pronounced difference of approximately a factor of 2. At a known flow rate and temperature, it is possible to create a conversion table to convert a measured pressure differential over the conduit to the solvent composition of the mobile phase.

### LIST OF REFERENCES

- 6: chromatography system
- 7a, 7b: binary pump
- 8a, 8b: flask
- 9a, 9b: filter
- 10: mixer
- 11: mobile phase
- 16: chromatography column
- 20: thermal flow sensor
- 21: heating element
- 22: first temperature sensor
- 23: second temperature sensor
- 24: heat distribution
- 25: pipe section
- 26: inlet end
- 27: outlet end
- 28: first cross-section
- 29: second cross-section

## Claims

1. A method for monitoring the solvent composition in a liquid chromatography system (6) with a mobile phase (11) in a fluid conduit, the mobile phase comprising or consisting essentially of a plurality of known solvents, said liquid chromatography system comprising a flow sensor, preferably a thermal flow sensor, adjacent to the mobile phase in the fluid conduit, said method comprising:
- passing the mobile phase by the flow sensor at a known flow rate;
- obtaining a measurement, via the flow sensor, of a transport property, such as a thermal property, an electrical property or viscosity property, of the mobile phase; and
- converting the measurement into a solvent composition using a pre-established correlation.

2. The method according to claim 1, wherein the flow sensor is a thermal flow sensor (20) including a heating element (21) adjacent to the mobile phase in the fluid conduit, said method comprising a step of introducing, via the heating element (21), a known amount of heat energy in the mobile phase, wherein the transport property is a thermal property, such as thermal conductivity or specific heat capacity, and the measurement is obtained, via the thermal flow sensor, in response to known amount of heat energy introduced into the mobile phase by the heating element.

3. The method according to any one of the previous claims, wherein the flow sensor is positioned in the fluid conduit upstream of, and preferably adjoining, a chromatography column (16) of the liquid chromatography system.

4. The method according to any one of the preceding claims, wherein the known flow rate is in the range of 1 nL/min - 20 mL/min, preferably 1 nL/min - 2 mL/min, more preferably 5 nL/min - 200 µL/min, or even more preferably 10 nL/min - 100 µL/min.

5. The method according to any one of the preceding claims, wherein the pressure of the mobile phase at the flow sensor is at least 200 bar, optionally at least 300 bar, preferably at least 500 bar, or more preferably at least 1000 bar.

6. The method according to any one of the preceding claims, wherein the flow sensor comprises a pipe section (25), wherein an inlet end (26) and an outlet end (27) of the pipe section forms part of the fluid conduit, wherein the fluid volume of the pipe section between the inlet end and outlet end is at most 1 µL, preferably at most 150 nL, or more preferably at most 100 nL.

7. The method according to any one of the previous claims, wherein the flow sensor comprises at least one first sensing element (22) and at least one second sensing element (23) arranged downstream of the first sensing element.

8. The method according to claim 7, wherein the fluid conduit comprises a measurement volume defined from the first sensing element to the second sensing element, wherein the measurement volume is at most 50 nL, preferably at most 25 nL, or more preferably 10 nL.

9. The method according to any one of the previous claims, further comprising a step of:
- determining a composition error by comparing the obtained solvent composition with an expected solvent composition.

10. The method according to claim 9, wherein the method is performed as part of an operational qualification (OQ) or quality control (QC) prior to initiating a liquid chromatography process, wherein the method further comprises the steps of:
- in accordance with a determination that the composition error is equal to or less than a predetermined threshold, initiating the liquid chromatography process; and
- in accordance with a determination that the composition error is greater than a predetermined threshold, sending an alert to the liquid chromatography system.

11. The method according to claim 10, wherein a step of detaching the flow sensor from the fluid conduit and resealing the fluid conduit is performed prior to initiating the liquid chromatography process.

12. The method according to claim 9, wherein the method is performed during a liquid chromatography process, further comprising the steps of:
- in accordance with a determination that the composition error is equal to or less than a predetermined threshold, continuing the liquid chromatography process; and
- in accordance with a determination that the composition error is greater than a predetermined threshold, sending an alert to the liquid chromatography system.

13. The method according to claim 12, wherein the method is performed continuously so as to monitor the solvent composition in the liquid chromatography system in real time.

14. A method of obtaining a pre-established correlation for use in a method according to any one of the previous claims, said method comprising the steps of:
- passing a mobile phase (11) comprising a pre-determined solvent composition of a plurality of known solvents, such as a first known solvent and a second known solvent, by a flow sensor (20), preferably a thermal flow sensor, at a known flow rate;
- preferably introducing, via a heating element (21) of the thermal flow sensor, a known amount of heat energy in the mobile phase;
- obtaining a measurement, via the flow sensor, of a transport property, preferably by measuring the dissipation of heat energy from the heating element;
- preferably repeating the preceding steps for one or more additional predetermined solvent compositions; and
- correlating the measurement(s) and the pre-determined solvent composition(s) to obtain the pre-established correlation.

15. A chromatographic system comprising flow sensor, preferably a thermal flow sensor, for monitoring the solvent composition of a mobile phase, wherein the flow sensor is in fluid connection with a chromatographic column and a sample loop during elution, and wherein the flow sensor is positioned upstream of, and preferably adjoining, the chromatographic column.
